# EUROPÄISCHE PATENTSCHRIFT

(11) **EP 3 560 766 B1**
(45) Veröffentlichungstag und Bekanntmachung des Hinweises auf die Patenterteilung: **24.11.2021**
(21) Anmeldenummer: 19168397.8
(22) Anmeldetag: 10.04.2019
(51) Int. Cl.: B60R 16/02, H01R 4/20

(54) **LEITUNGSANORDNUNG FÜR EIN BORDNETZ EINES KRAFTFAHRZEUGS**
CABLE ASSEMBLY FOR AN ELECTRICAL NETWORK OF A MOTOR VEHICLE
ENSEMBLE DE CÂBLE POUR UN RÉSEAU DE BORD D'UN VÉHICULE AUTOMOBILE

(30) Priorität: 27.04.2018 DE 102018110225
(43) Veröffentlichungstag der Anmeldung: 30.10.2019
(73) Patentinhaber: Lisa Dräxlmaier GmbH, 84137 Vilsbiburg (DE)
(72) Erfinder: Wegscheider, Klaus, 84095 Arth/Furth (DE); Seidenschwand, Martin, 84028 Landshut (DE); Biberger, Martin, 84107 Weihmichl (DE); Jakob, Günther, 94439 Roßbach (DE); Zemann, Daniel, 84036 Landshut (DE); Himmel, Jörg, 84072 Au i. d. Hallertau (DE)

(56) Entgegenhaltungen:
- EP-A1- 3 118 932
- WO-A1-2015/058887
- DE-A1- 19 937 510
- FR-A1- 3 055 169
- GB-A- 2 250 388
- US-A1- 2013 140 082

## Beschreibung

### Technisches Gebiet

Die vorliegende Erfindung betrifft eine Leitungsanordnung für ein Bordnetz eines Kraftfahrzeugs.

### Stand der Technik

Das physische Bordnetz von Kraftfahrzeugen hat üblicherweise die Aufgabe, Steuergeräte und elektrische Lasten beziehungsweise Verbraucher mit elektrischer Energie und einer Datenanbindung zu versorgen. Insbesondere derjenige Teil des Bordnetzes, welcher zur Versorgung von Steuergeräten und elektrischen Lasten beziehungsweise Verbrauchern mit elektrischer Energie dient, nimmt wegen der stetig steigenden Anzahl an Verbrauchern im Bordnetz an Umfang und Gewicht zu.

Üblicherweise übernehmen jeweilige elektrische Leitungen nur den Energietransport. Eine Energieverteilung wird meist nur an jeweiligen Leitungsenden, beispielsweise mit Hilfe von Stromverteilern, ermöglicht. Dies führt zu einer parallelen Verlegung von Leitungen mit gleichem Potential. Um dies zu vermeiden, müssen Abgriffe direkt an beziehungsweise auf eine Hauptversorgungsleitung für das betreffende Bordnetz realisiert werden. Oftmals bestehen solche Hauptversorgungsleitungen und als Stromverteiler dienende Abgriffe aus unterschiedlichen metallischen Materialien. Ungeschützt führen solche Materialpaarungen in Verbindung mit einem Elektrolyten zu Korrosion und zu einem frühzeitigen Ausfall.

Die GB 2 250 388 A bezieht sich auf ein einstückiges, durch Stanzen und Formen aus Metall gebildetes Stopfglied zum Reduzieren des Innendurchmessers einer Crimphülse mit kreisförmigem Querschnitt. Das Stopfglied weist einen ersten Bereich mit bogenförmig gekrümmtem Querschnitt und einen zweiten Bereich mit bogenförmig gekrümmtem Querschnitt und im wesentlichen demselben Krümmungsradius wie der erste Bereich auf, wobei der Scheitelbereich des Bogens des ersten Bereichs an seinem einen Ende mit einem Ende des Scheitelbereichs des Bogens des zweiten Bereichs durch einen Hals verbunden ist, der sich derart biegen lässt, dass sich der zweite Bereich in dem ersten Bereich im Wesentlichen parallel an diesem anliegend aufnehmen lässt.

Des Weiteren offenbart die FR 3 055 169 A1 eine elektrische Schaltung mit mindestens einem Leiter mit einem leitenden Kern und isolierenden Mantel, wobei an einem abisolierten Teil des Leiterkerns eine elektrische Verbindungsvorrichtung direkt mit dem Leiterkern verbunden ist. Die elektrische Verbindungsvorrichtung umfasst ein Verbindungselement, das einen ersten Verbindungszweig umfasst, der einen Verbindungsanschluss bildet, und einen zweiten Verbindungszweig, der mit dem Kern des Leiters verbunden werden soll. Die elektrische Verbindungsvorrichtung umfasst ferner ein Rohr, das einen Zwischenteil umfasst, der durch Crimpen auf den abisolierten Teil des Leiterkerns gecrimpt wird, so dass ein Verbindungszweig über das Rohr mit dem Kern des Leiters verbunden ist.

Gemäß der EP 3 118 932 A1 umfasst ein elektrisches Kabel ein elektrisches Verdrahtungselement und ein elektrisches Verbindungselement, das versiegelt an das elektrische Verdrahtungselement gecrimpt ist, wobei das elektrische Verdrahtungselement mit einem anderen elektrischen Verdrahtungselement verbunden werden kann.

### Beschreibung der Erfindung

Es ist die Aufgabe der vorliegenden Erfindung, eine Lösung bereitzustellen, mittels welcher beim Abgreifen von Energie beziehungsweise Strom von einer Hauptversorgungsleitung eines Bordnetzes auf zuverlässige Weise Korrosion vermieden werden kann.

Diese Aufgabe wird durch eine Leitungsanordnung für ein Bordnetz eines Kraftfahrzeugs mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Die erfindungsgemäße Leitungsanordnung für ein Bordnetz eines Kraftfahrzeugs umfasst eine Hauptversorgungsleitung für das Bordnetz und wenigstens einen zum Abgreifen von Strom für zumindest einen Verbraucher dienenden Stromverteiler, welcher an zumindest einem abisolierten Kontaktierungsbereich der Hauptversorgungsleitung elektrisch leitend mit dieser verbunden ist, wobei der Stromverteiler und die Hauptversorgungsleitung zumindest im Kontaktierungsbereich außenseitig von einer Dichtung flüssigkeitsdicht umschlossen sind.

Bei dem Stromverteiler kann es sich um einen so genannten Kleinverteiler handeln, mittels welchem ein Energie- beziehungsweise Stromabgriff direkt an der Hauptversorgungsleitung ermöglicht wird. Insbesondere wenn die Hauptversorgungsleitung und der Stromverteiler aus unterschiedlichen Materialien bestehen und somit im Kontaktierungsbereich eine Materialpaarung aus unterschiedlichen metallischen Materialien bilden, ist es mittels der erfindungsgemäßen Leitungsanordnung möglich, das Eindringen eines Elektrolyten in den Kontaktierungsbereich zuverlässig zu verhindern. Dadurch, dass der Stromverteiler und die Hauptversorgungsleitung zumindest im Kontaktierungsbereich außenseitig von der Dichtung flüssigkeitsdicht umschlossen sind, kann in den Kontaktierungsbereich kein Elektrolyt eindringen. Infolgedessen kann das Auftreten von Kontaktkorrosion zuverlässig verhindert werden.

Ein Vorteil der beschriebenen Leitungsanordnung ist, dass diese eine Energieverteilung oder Kontaktierung nicht nur an den jeweiligen Leitungsenden der Hauptversorgungsleitung, sondern vielmehr einen Abgriff zwischen den beiden Leitungsenden ermöglichen. So können an einer Hauptversorgungsleitung eine Mehrzahl solcher Abgriffe vorgesehen sein. So können eine Mehrzahl von Kleinverteilern entlang des Verlegeweges der durchgehenden Hauptversorgungsleitung vorgesehen sein.

Bei der erfindungsgemäßen Leitungsanordnung ist es insbesondere auch möglich, relativ günstige Stanzbiegeteile als den Stromverteiler zu verwenden, infolgedessen die gesamte Leitungsanordnung besonders günstig hergestellt werden kann. Denn durch das Vorsehen der Dichtung, welche den Stromverteiler und die Hauptversorgungsleitung zumindest im Kontaktierungsbereich außenseitig umschließt, bestehen keine besonderen Anforderungen hinsichtlich des Stromverteilers; beispielsweise ist es nicht erforderlich, den Stromverteiler aus zwei unterschiedlichen Metallen herzustellen, wobei das eine Metall dem Werkstoff der Hauptversorgungsleitung entspricht, um so Kontaktkorrosion zu vermeiden. Denn mittels der erfindungsgemäßen Lösung kann sichergestellt werden, dass auch unterschiedliche Materialpaarungen von Stromverteiler und Hauptversorgungsleitung insbesondere im Kontaktierungsbereich vor Flüssigkeit geschützt werden können.

Eine vorteilhafte Ausführungsform der Erfindung sieht vor, dass die Hauptversorgungsleitung ein Rundleiter oder ein Flachleiter ist. In letzterem Fall kann es sich bei der Hauptversorgungsleitung beispielsweise auch um eine so genannte Stromschiene handeln, welche als einfache Stromschiene oder auch als so genannte Multischiene mit mehreren übereinander angeordneten Schienen ausgebildet sein kann.

Eine weitere vorteilhafte Ausführungsform der Erfindung sieht vor, dass die Hauptversorgungsleitung einen ersten leitenden Kern aus Aluminium und einen zweiten leitenden Kern aus Kupfer aufweist, welcher den Kontaktierungsbereich aufweist. Bei einem Stromverteiler oder auch bei am Bordnetz angeschlossenen Verbrauchern mit besonderen Kontakten kann dadurch das Stromleitverhalten der Hauptversorgungsleitung im Kontaktierungsbereich besonders günstig eingestellt werden.

Gemäß einer alternativen vorteilhaften Ausführungsform der Erfindung ist es vorgesehen, dass die Hauptversorgungsleitung ausschließlich einen leitenden Kern aus Aluminium aufweist. Dadurch kann die Hauptversorgungsleitung zum einen besonders einfach und kostengünstig hergestellt werden. Zum anderen weist die Hauptversorgungsleitung dadurch im Vergleich zu einer Hybridvariante mit einem leitenden Kern aus Aluminium und einem leitenden Kern aus Kupfer ein besonders geringes Gewicht auf.

In weiterer vorteilhafter Ausgestaltung der Erfindung ist es vorgesehen, dass der Stromverteiler aus Kupfer hergestellt ist. Bei dem Stromverteiler kann es sich beispielsweise um ein Stanzbiegeteil handeln. Der Stromverteiler kann auch aus entsprechend geeigneten Kupferlegierungen hergestellt sein. In jedem Fall weist der Stromverteiler besonders gute stromleitende Eigenschaften auf.

Eine weitere vorteilhafte Ausführungsform der Erfindung sieht vor, dass die Dichtung jeweilige an den Kontaktierungsbereich angrenzende Isolierungsabschnitte der Hauptversorgungsleitung umschließt. Es ist also vorzugsweise vorgesehen, dass der Stromverteiler und die Hauptversorgungsleitung nicht nur im Kontaktierungsbereich alleine außenseitig von der Dichtung flüssigkeitsdicht umschlossen sind. Zusätzlich ist es vorgesehen, jeweilige an den Kontaktierungsbereich angrenzende Isolierungsabschnitte der Hauptversorgungsleitung ebenfalls mit der Dichtung zu umschließen. Dadurch kann eine besonders zuverlässige abdichtende Wirkung erzielt werden.

In weiterer vorteilhafter Ausgestaltung der Erfindung ist es vorgesehen, dass ein Stromverteilerbereich beabstandet von einem der Isolierungsabschnitte angeordnet ist, wobei zwischen dem Stromverteilerbereich und dem betreffenden Isolierungsabschnitt ein Einleger, insbesondere aus Butyl, zum Abdichten angeordnet ist. Weist beispielsweise die Hauptversorgungsleitung einen runden Querschnitt auf, wobei der besagte Stromverteilerbereich eher eine plattenförmige Formgebung aufweist, so kann durch den Einleger, welcher vorzugsweise aus Butyl hergestellt ist, eine besonders zuverlässige Abdichtwirkung erzielt werden.

Gemäß einer weiteren vorteilhaften Ausführungsform der Erfindung ist es vorgesehen, dass die Hauptversorgungsleitung unterbrochen ist, wobei jeweilige freie abisolierte als Kontaktierungsbereiche dienende Endabschnitte der Hauptversorgungsleitung mit dem Stromverteiler verbunden sind. Beispielsweise können die als Kontaktierungsbereiche dienenden Endabschnitte der Hauptversorgungsleitung auf den Stromverteiler aufgeschweißt sein. Bei dieser vorteilhaften Ausführungsform der Erfindung ist es also vorgesehen, dass der Stromverteiler nicht einfach auf die Hauptversorgungsleitung aufgebracht und mit dieser verbunden wird. Stattdessen ist es vorgesehen, dass die Hauptversorgungsleitung mit einer Unterbrechung versehen wird, wobei jeweilige an die Unterbrechung angrenzende Endabschnitte der Hauptversorgungsleitung mit dem Stromverteiler verbunden sind. In diesem Fall sind die Hauptversorgungsleitung und der Stromverteiler zumindest in den beiden Kontaktierungsbereichen von der Dichtung umgeben. Besonders bevorzugt umgibt die Dichtung zusätzlich auch noch jeweilige Isolierungen der Endabschnitte der Hauptversorgungsleitung. Bei dieser Variante können besonders große, stromtragende Querschnitte der Hauptversorgungsleitung mit dem Stromverteiler verbunden werden.

Gemäß einer weiteren vorteilhaften Ausführungsform der Erfindung ist es vorgesehen, dass der Stromverteiler ein Blech ist. In dem Fall müssen die als Kontaktierungsbereich dienenden Endabschnitte der Hauptversorgungsleitung einfach auf den blechförmigen Stromverteiler aufgesetzt und beispielsweise mit diesem verschweißt werden. Dadurch ist eine besonders einfache Kontaktierungsmöglichkeit zwischen der Hauptversorgungsleitung und dem Stromverteiler gegeben.

Eine alternative vorteilhafte Ausführungsform der Erfindung sieht vor, dass der Stromverteiler ein Rohr umfasst, in welchem die Endabschnitte der Hauptversorgungsleitung angeordnet sind. Das Rohr des Stromverteilers umgibt somit die Endabschnitte der Hauptversorgungsleitung außenumfangsseitig. Dies ist insbesondere dann besonders vorteilhaft, wenn die Hauptversorgungsleitung ein Rundleiter ist. In dem Fall können besonders große stromtragende Flächen beim Rohr des Stromverteilers in der Hauptversorgungsleitung dafür genutzt werden, um Energie beziehungsweise Strom von der Hauptversorgungsleitung auf den Stromverteiler abzuzweigen. Weist die Hauptversorgungsleitung einen Querschnitt auf, welcher nicht rund ist, so kann anstelle des Rohrs ein anderer Hohlkörper verwendet werden, in welchen die jeweiligen Endabschnitte der Hauptversorgungsleitungen zumindest im Wesentlichen passgenau eingeschoben werden können.

Eine alternative vorteilhafte Ausführungsform der Erfindung sieht vor, dass die Dichtung ein Schrumpfschlauch, insbesondere ein Klebeschrumpfschlauch, ist. Die als Schrumpfschlauch ausgebildete Dichtung kann besonders einfach über den Stromverteiler und die Hauptversorgungsleitung gestülpt werden, wobei unter Hitzeeinwirkung der Schrumpfschlauch dann auf den betreffenden Bereich des Stromverteilers und der Hauptversorgungsleitung aufgeschrumpft wird. Dadurch kann eine besonders gute Abdichtwirkung erzielt werden. Wenn es sich bei dem Schrumpfschlauch um einen Klebeschrumpfschlauch handelt, kann eine nochmals verbesserte Abdichtwirkung erzielt werden, da der Klebeschrumpfschlauch beim Aufschrumpfen zusätzlich noch am Stromverteiler und der Hauptversorgungsleitung anhaftet.

Eine alternative vorteilhafte Ausführungsform der Erfindung sieht vor, dass die Dichtung ein Schaumstoff ist. Neben einer reinen Abdichtfunktion und somit einem Korrosionsschutz übernimmt der Schaumstoff zusätzlich noch eine mechanische Funktion. Der Schaumstoff kann insbesondere den Stromverteiler und jeweilige Kontaktelemente des Stromverteilers abstützten. Der Schaumstoff weist vorzugsweise eine hohe Elastizität und Zähigkeit auf, sodass den Bewegungen der Leitungsanordnung gefolgt werden kann. Durch die gute Dichtfunktion des Schaumstoffs ist auch eine Nassraumvariante möglich. Hierzu sind lediglich Einzeladerabdichtungen an jeweiligen abgesicherten Leitungen erforderlich, mit welchen der Stromverteiler zumindest mittelbar verbunden ist. Sofern die Leitungsanordnung noch eine Sicherung aufweist, unter deren Vermittlung der Stromverteiler mit Leitungen für den zumindest einen Verbraucher verbunden ist, kann beispielsweise noch eine zusätzliche Kappe an der betreffenden Sicherung vorgesehen werden.

In weiterer vorteilhafter Ausgestaltung der Erfindung ist es vorgesehen, dass der Stromverteiler mit einem Kunststoffträger verbunden ist, welcher wenigstens ein Kontaktelement des Stromverteilers abstützt. Das Kontaktelement des Stromverteilers kann beispielsweise in eine Sicherung eingesteckt werden, welche wiederum zur Verbindung mit von dem Stromverteiler abgehenden Leitungen dienen kann. Der Kunststoffträger kann beispielsweise auf den Stromverteiler aufgespritzt oder auch aufgesteckt werden. Filigrane Kontakte am Stromverteiler, beispielsweise in Form des besagten Kontaktelements, können so schon zu einem besonders frühen Zeitpunkt während der Herstellung beziehungsweise Montage der Leitungsanordnung geschützt werden. Ein Verbiegen des besagten Kontaktelements des Stromverteilers durch Verhaken oder anderweitige äußere Einflüsse kann dadurch vermieden werden.

In weiterer vorteilhafter Ausgestaltung der Erfindung ist es vorgesehen, dass ein Teil des Kunststoffträgers mittels der Dichtung abgedichtet ist. Wird als die Dichtung beispielsweise der besagte Schaumstoff verwendet, so kann der Schaumstoff sowohl den Stromverteiler als auch den besagten Kunststoffträger abstützen und mit der Hauptversorgungsleitung verbinden. Infolgedessen kann der Kunststoffträger relativ klein dimensioniert werden und einfach ausfallen, da der Schaumstoff eine mechanisch abstützende Funktion übernimmt.

Bei dem erfindungsgemäßen Verfahren zum Herstellen einer Leitungsanordnung für ein Bordnetz eines Kraftfahrzeugs wird eine Hauptversorgungsleitung für das Bordnetz und wenigstens ein zum Abgreifen von Strom für zumindest einen Verbraucher dienender Stromverteiler an zumindest einem abisolierten Kontaktierungsbereich der Hauptversorgungsleitung elektrisch leitend mit dieser verbunden, wobei der Stromverteiler und die Hauptversorgungsleitung zumindest im Kontaktierungsbereich außenseitig von einer Dichtung flüssigkeitsdicht umschlossen werden. Vorteilhafte Ausgestaltungen der erfindungsgemäßen Leitungsanordnung sind als Vorteilhafte Ausgestaltungen des erfindungsgemäßen Verfahrens und umgekehrt anzusehen.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine Perspektivansicht einer ersten Ausführungsform einer Leitungsanordnung für ein Bordnetz eines Kraftfahrzeugs, umfassend eine Hauptversorgungsleitung für das Bordnetz und eine zum Abgreifen von Strom für zumindest einen Verbraucher dienenden Stromverteiler, welcher an einem abisolierten Kontaktierungsbereich der Hauptversorgungsleitung elektrisch leitend mit dieser verbunden ist, wobei der Stromverteiler und die Hauptversorgungsleitung außenseitig von einem als Dichtung dienenden Schrumpfschlauch umgeben sind;
- Fig. 2: eine Seitenansicht der ersten Ausführungsform der Leitungsanordnung, wobei am Stromverteiler eine abgesicherte Leitung unter Vermittlung einer Sicherung angeschlossen ist;
- Fig. 3: eine Seitenansicht einer zweiten Ausführungsform der Leitungsanordnung, wobei diese sich von der ersten Ausführungsform dadurch unterscheidet, dass die Hauptversorgungsleitung einen leitenden Kern aus Aluminium und einen leitenden Kern aus Kupfer aufweist;
- Fig. 4: eine Draufsicht auf eine dritte Ausführungsform der Leitungsanordnung, wobei die Hauptversorgungsleitung unterbrochen ist und freie abisolierte als Kontaktierungsbereich dienende Endabschnitte der Hauptversorgungsleitung mit dem Stromverteiler verbunden sind;
- Fig. 5: eine Draufsicht auf die dritte Ausführungsform der Leitungsanordnung, wobei mehrere abgesicherte Leitungen unter Vermittlung einer Sicherung an dem Stromverteiler angeschlossen sind und die Leitungsanordnung mittels zweier Klebeschrumpfschläuche abgedichtet ist;
- Fig. 6: eine Seitenansicht einer vierten Ausführungsform der Leitungsanordnung, wobei diese sich von der vierten Ausführungsform dadurch unterscheidet, dass der Stromverteiler ein Rohr umfasst, in welchem die Endabschnitte der Hauptversorgungsleitung angeordnet sind;
- Fig. 7: eine Seitenansicht der vierten Ausführungsform, in welcher das Rohr des Stromverteilers zu erkennen ist, welches eines der Endabschnitte der Hauptversorgungsleitung umgibt;
- Fig. 8: eine Draufsicht auf die vierte Ausführungsform der Leitungsanordnung, wobei unter Vermittlung einer Sicherung mehrere abgesicherte Leitungen mit dem Stromverteiler verbunden sind;
- Fig. 9: eine schematische Perspektivansicht der vierten Ausführungsform der Leitungsanordnung, in welcher das Zusammenfügen der Endabschnitte der Hauptversorgungsleitung mit dem Rohr des Stromverteilers dargestellt ist;
- Fig. 10: eine Seitenansicht einer fünften Ausführungsform der Leitungsanordnung, wobei diese sich von der zweiten Ausführungsform dadurch unterscheidet, dass die Dichtung nicht mehr durch einen Schrumpfschlauch, sondern durch einen Schaumstoff gebildet ist;
- Fig. 11: eine Frontalansicht auf die fünfte Ausführungsform der Leitungsanordnung;
- Fig. 12: eine Draufsicht auf die fünfte Ausführungsform der Leitungsanordnung; und in
- Fig. 13: eine Draufsicht auf eine sechste Ausführungsform der Leitungsanordnung, welche sich von der fünften Ausführungsform durch eine Abgangsrichtung jeweiliger abgesicherter Leitungen unterscheidet.

In den Figuren sind gleiche oder funktionsgleiche Elemente mit den gleichen Bezugszeichen versehen worden.

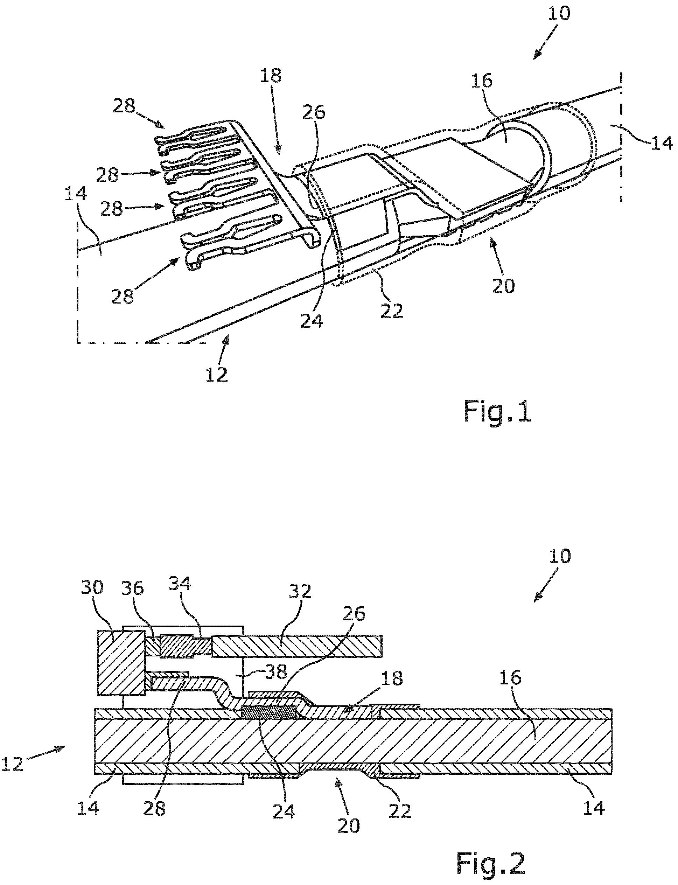

Eine erste Ausführungsform einer Leitungsanordnung 10 für ein nicht näher bezeichnetes Bordnetz eines Kraftfahrzeugs ist in einer Perspektivansicht in Fig. 1 teilweise dargestellt. Die Leitungsanordnung 10 umfasst eine Hauptversorgungsleitung 12 für das Bordnetz. Die Hauptversorgungsleitung 12 umfasst eine Isolierung 14, welche einen leitenden Kern 16 aus Aluminium umgibt. Des Weiteren umfasst die Leitungsanordnung 10 einen Stromverteiler 18, welcher dazu dient, Strom von der Hauptversorgungsleitung 12 für zumindest einen Verbraucher abzugreifen. Der Stromverteiler 18 ist vorzugsweise aus Kupfer hergestellt, wobei es sich bei dem Stromverteiler 18 beispielsweise um ein Stanzbiegeteil handeln kann.

An einem abisolierten Kontaktierungsbereich 20 der Hauptversorgungsleitung 12 ist der Stromverteiler 18 elektrisch leitend mit der Hauptversorgungsleitung 12, genauer mit dem leitenden Kern 16 aus Aluminium, verbunden. Beispielsweise kann der Stromverteiler 18 auf den Kontaktierungsbereich 20 aufgeschweißt werden. Andere Verfahren sind jedoch ebenfalls möglich, mittels welchen eine elektrisch leitendende Verbindung zwischen dem Stromverteiler 18 und dem Kontaktierungsbereich 20 herstellbar ist.

Der Stromverteiler 18 und die Hauptversorgungsleitung 12 sind im Kontaktierungsbereich außenseitig von einer als Schrumpfschlauch 22 ausgebildeten Dichtung flüssigkeitsdicht umschlossen. Zudem umschließt der Schrumpfschlauch 22 noch jeweilige an den Kontaktierungsbereich 20 angrenzende Isolierungsabschnitte der Isolierung 14. Bei dem Schrumpfschlauch 22 kann es sich auch beispielsweise um einen Klebeschrumpfschlauch handeln. Dadurch kann eine besonders gut abdichtende Wirkung erzielt werden.

Um den Kontaktierungsbereich 20 besonders gut vor einem Eintritt eines Elektrolyten zu schützen, ist zusätzlich noch ein Einleger 24, beispielsweise aus Butyl, vorgesehen. Ein Stromverteilerbereich 26 des Stromverteilers 18 ist ein wenig beabstandet von einem der Isolierungsabschnitte angeordnet, welche an den Kontaktierungsbereich 20 angrenzen. Zwischen dem Stromverteilerbereich 26 und dem betreffenden Isolierungsabschnitt ist der Einleger 24 zum Abdichten angeordnet. Selbst wenn also der Stromverteilerbereich 26 der Kontur der Isolierung 14 nicht komplett folgen sollte, kann durch den Einleger 24 sichergestellt werden, dass der Kontaktierungsbereich 20 zuverlässig abgedichtet wird. über jeweilige Kontaktelemente 28 des Stromverteilers 18 können einzelne, hier nicht dargestellte Verbraucher mit Strom versorgt werden, welcher von der Hauptversorgungsleitung 12 abgezweigt beziehungsweise abgegriffen wird.

In Fig. 2 ist die erste Ausführungsform der Leitungsanordnung 10 in einer Seitenansicht gezeigt. Die einzelnen Kontaktelemente 28 des aus einem Kupferblech hergestellten Stromverteilers 18 sind in jeweilige Sicherungen 30 eingesteckt. Entsprechend der Anzahl der Kontakteelemente 28 ist eine entsprechende Anzahl an abgesicherten Leitungen 32 vorgesehen, welche unter Vermittlung jeweiliger Leitungssatzkontakte 34 und jeweiliger Kontaktsicherungen 36 unter Vermittlung der Sicherung 30 mit den jeweiligen Kontaktelementen 28 des Stromverteilers 18 verbunden sind. Die Kontaktelemente 28, die Sicherungen 30, die Kontaktsicherungen 36, die Leitungssatzkontakte 34 und zum Teil die abgesicherten Leitungen 32 werden von einem Kunststoffträger 38 abgestützt.

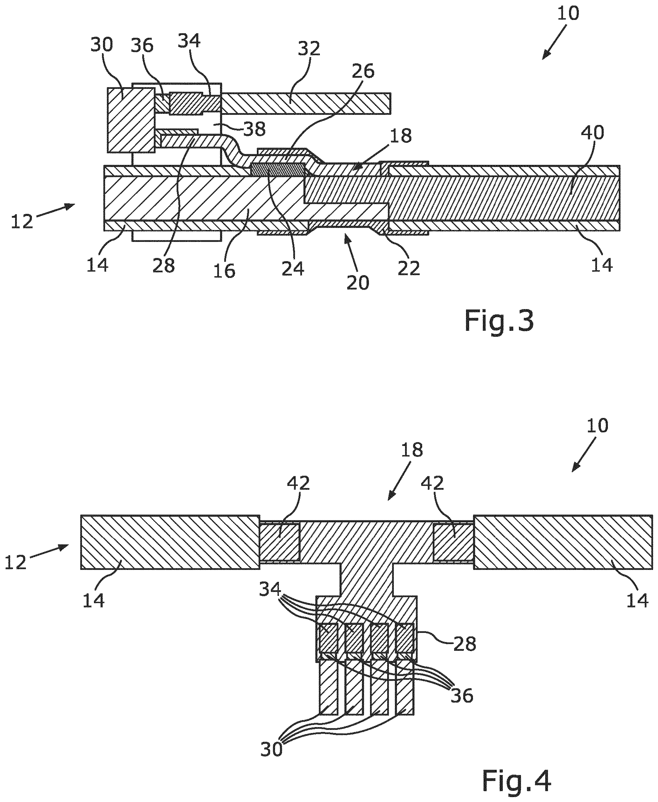

In Fig. 3 ist eine zweite Ausführungsform einer Leitungsanordnung 10 für ein Bordnetz eines Kraftfahrzeugs in einer Seitenansicht gezeigt. Diese Ausführungsform unterscheidet sich von der ersten Ausführungsform dadurch, dass die Hauptversorgungsleitung 12 neben dem ersten leitenden Kern 16 aus Aluminium noch einen zweiten leitenden Kern 40 aus Kupfer aufweist, welcher den Kontaktierungsbereich 20 aufweist, mit welchem der Stromverteiler 18 leitend verbunden ist.

Die beiden leitenden Kerne 16, 40 sind in einer Variante, wie in Fig. 3 dargestellt, in einem Überlappungsbereich miteinander verbunden. Alternativ stoßen die beiden leitenden Kerne 16, 40 stumpf aufeinander. Vorteilhaft sind die beiden leitenden Kerne 16, 40 stoffschlüssig miteinander verbunden.

Bei ganz bestimmten Stromverteilern 18 oder Verbrauchern mit besonderen Kontakten kann es von Vorteil sein, wenn der vorzugsweise aus Kupfer hergestellte Stromverteiler 18 auch mit einem aus Kupfer hergestellten Bereich der Hauptversorgungsleitung 12 verbunden wird. Dies wird im hier gezeigten Fall dadurch realisiert, dass die Hauptversorgungsleitung 12 zum einen den Kern 16 aus Aluminium und zum anderen den Kern 40 aus Kupfer aufweist, wobei die Verbindung zwischen dem Stromverteiler 18 und der Hauptversorgungsleitung 12 am zweiten leitenden Kern 40 aus Kupfer erfolgt, welcher den Kontaktierungsbereich 20 aufweist. In dem Fall kann auch eine Materialpaarung aus gleichen Materialien mit dem Stromverteiler 18 und der Hauptversorgungsleitung 12 am Kontaktierungsbereich 20 realisiert werden. Aufgrund der Materialpaarung aus gleichen Materialien kann das Risiko der Kontaktkorrosion auf ein Minimum reduziert oder vollkommen verhindert werden.

In Fig. 4 ist eine dritte Ausführungsform der Leitungsanordnung 10 für ein Bordnetz eines Kraftfahrzeugs in einer Draufsicht gezeigt. Diese Ausführungsform unterscheidet sich von den vorangegangenen Ausführungsformen dadurch, dass die Hauptversorgungsleitung 12 unterbrochen ist, wobei jeweilige freie abisolierte als Kontaktierungsbereich dienende Endabschnitte 42 der Hauptversorgungsleitung 12 mit dem Stromverteiler 18 verbunden sind. Bei dieser Ausführungsform wird also die Hauptversorgungsleitung 12 unterbrochen und mit ihren beiden Endabschnitten 42 auf den hier als flaches Blech ausgebildeten Stromverteiler 18 aufgeschweißt. Ausgangsseitig weist der Stromverteiler 18 wiederum jeweilige Kontaktelemente 28 auf, welche unter Vermittlung jeweiliger Sicherungen 30, Kontaktsicherungen 36 und Leitungssatzkontakte 34 mit hier nicht dargestellten abgesicherten Leitungen 32 verbunden werden können.

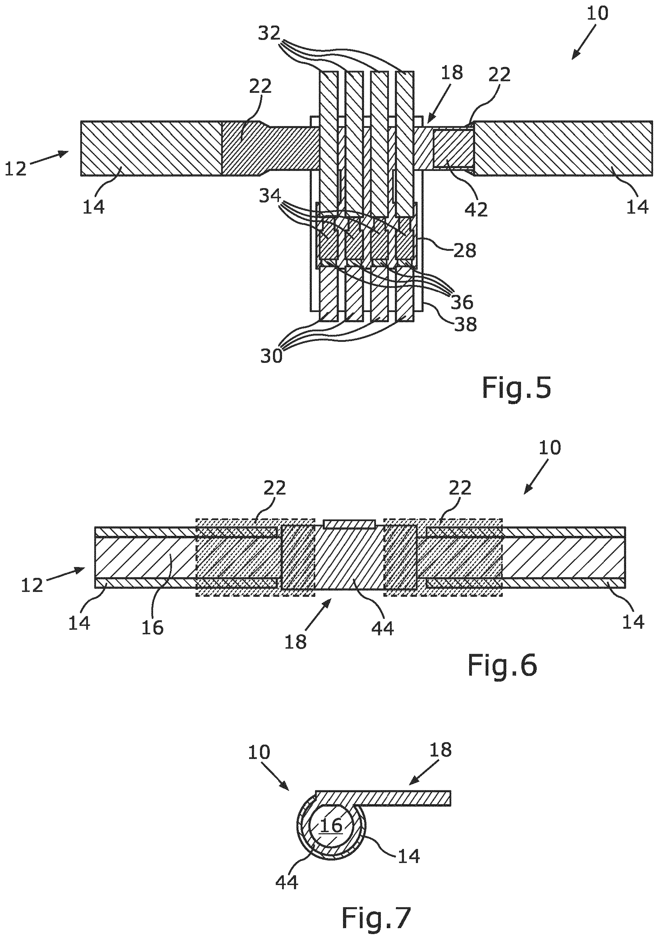

In Fig. 5 ist die dritte Ausführungsform der Leitungsanordnung 10 in einer weiteren Draufsicht gezeigt, wobei noch die jeweiligen abgesicherten Leitungen 32 und jeweilige als Dichtung fungierende Klebeschrumpfschläuche 22 dargestellt sind. Zusätzlich ist wiederum ein Kunststoffträger 38 gezeigt, welcher unter anderem den Stromverteiler 18 abstützt. Die jeweiligen freien abisolierten als Kontaktbereiche dienenden Endabschnitte 42 werden mittels jeweiliger Klebeschrumpfschläuche 22 abgedichtet. Die Klebeschrumpfschläuche 22 umgeben dabei den Stromverteiler 18 im Bereich der Endabschnitte 42 und umgeben zusätzlich noch die jeweiligen Isolierungen 14 der Hauptversorgungsleitung 12.

In Fig. 6 ist eine vierte Ausführungsform einer Leitungsanordnung 10 für ein Bordnetz eines Kraftfahrzeugs in einer Seitenansicht gezeigt. Diese Ausführungsform unterscheidet sich von der dritten Ausführungsform dadurch, dass der Stromverteiler 18 ein Rohr 44 umfasst, in welchem die hier nicht erkennbaren Endabschnitte 42 der Hauptversorgungsleitung 12 angeordnet sind. Hier erfolgt die Kontaktierung also nicht über einen flachen Blechbereich des Stromverteilers 18, sondern über das besagte Rohr 44, in das die beiden Endabschnitte 42 der Hauptversorgungsleitung 12 eingeführt und stromleitend mit dem Rohr 44 verbunden sind.

In Fig. 7 ist die vierte Ausführungsform der Leitungsanordnung 10 im Bereich des Rohrs 44 in einer Querschnittsansicht gezeigt. Hier kann man gut erkennen, wie das Rohr 44 den Kern 16 der Hauptversorgungsleitung 12 umschließt. Auf diese Weise wird eine besonders große Fläche zum Übertragen von Strom von der Hauptversorgungsleitung 12 auf den Stromverteiler 18 bereitgestellt. Die Kontaktierungsbereiche, in welchen die Hauptversorgungsleitung 12 mit dem Stromverteiler 18 verbunden ist, werden wiederum beispielsweise mittels jeweiliger Klebeschrumpfschläuche 22 abgedichtet, welche zusätzlich auch noch teilweise die Isolierung 14 umgeben.

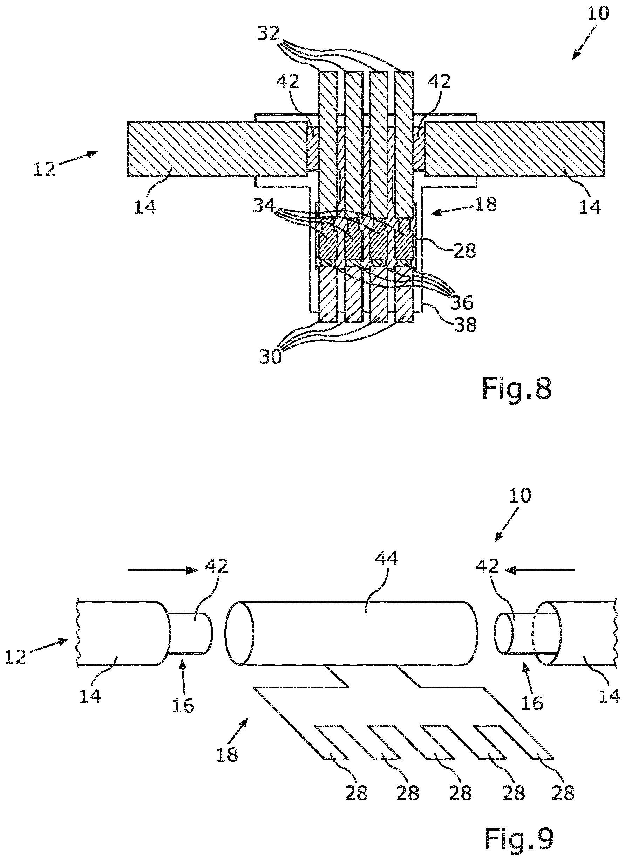

In Fig. 8 ist die vierte Ausführungsform der Leitungsanordnung 10 in einer Draufsicht gezeigt, wobei vorliegend jeweilige angeschlossenen Leitungen 32 dargestellt sind, welche wiederum unter Vermittlung von Sicherungen 30, Kontaktsicherungen 36 und Leitungssatzkontakten 34 mit dem Stromverteiler 18 verbunden sind. Der Stromverteiler wird wiederum von einem Kunststoffträger 38 abgestützt.

In Fig. 9 ist in einer schematischen Darstellung ein Verbindungsvorgang gezeigt, bei welchem die jeweiligen freien abisolierten als Kontaktierungsbereiche dienenden Endabschnitte 42 der Hauptversorgungsleitung 12 in das Rohr 44 des Stromverteilers 18 eingeführt und mit diesen verbunden werden.

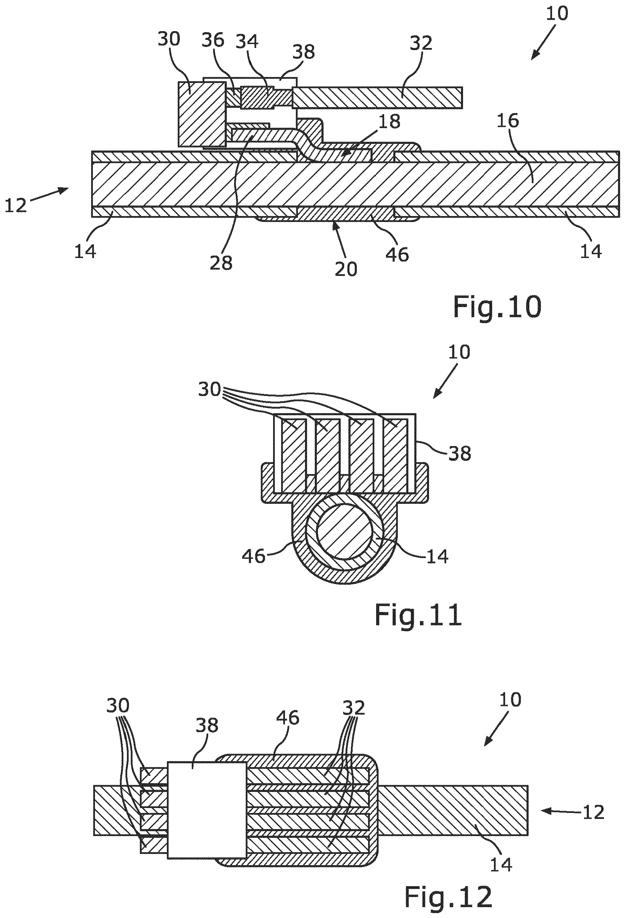

In Fig. 10 ist eine fünfte Ausführungsform einer Leitungsanordnung 10 für ein Bordnetz eines Kraftfahrzeugs in einer Seitenansicht gezeigt. Diese Ausführungsform unterscheidet sich von der in den Fig. 1 und 2 gezeigten ersten Ausführungsform dadurch, dass als Dichtung kein Schrumpfschlauch, sondern ein Schaum beziehungsweise Schaumstoff 46 verwendet worden ist. Der Stromverteiler 18 kann beispielsweise aus einem Kupferblech gestanzt werden. Danach wird ein Kunststoffträger 38 auf den aus dem Kupferblech hergestellten Stromverteiler 18 aufgespritzt oder gegebenenfalls auch aufgesteckt. Dadurch werden insbesondere die filigranen Kontaktelemente 28 schon zu einem sehr frühen Herstellungsbeziehungsweise Montagezeitpunkt geschützt. Ein Verbiegen der Kontaktelemente 28 durch Verhaken oder anderweitige äußere Einflüsse kann dadurch verhindert werden. Die Hauptversorgungsleitung 12 wird im Kontaktierungsbereich 20 abisoliert.

Der aus dem Kupferblech hergestellte Stromverteiler 18 mitsamt dem Kunststoffträger 38 werden dann im Kontaktierungsbereich 20 auf den aus Aluminium hergestellten Kern 16 der Hauptversorgungsleitung 12 aufgeschweißt. Der abisolierte Kontaktierungsbereich 20 wird geschäumt, sodass der Schaumstoff 46 den Kern 16, die Isolierung 14 der Hauptversorgungsleitung 12, den aus dem Kupferblech hergestellten Stromverteiler 18 außerhalb des Kunststoffträgers 38 und eine Rückseite des Kunststoffträgers 38 umgibt und somit abdichtet. Neben einem Korrosionsschutz übernimmt der Schaumstoff 46 auch eine mechanische Funktion. Der Kunststoffträger 38 kann dadurch relativ klein und einfach ausfallen, weil der Schaumstoff 46 sowohl den aus dem Kupferblech hergestellten Stromverteiler 18 als auch den Kunststoffträger 38 mit der Hauptversorgungsleitung 12 mechanisch verbindet.

Der Schaumstoff 46 verfügt über eine hohe Elastizität und Zähigkeit, sodass Bewegungen der Hauptversorgungsleitung 12 gefolgt werden kann. Die abgesicherten Leitungen 32 werden eingesteckt und die Sicherungen 30 werden ebenfalls eingesteckt. Durch die gute Dichtfunktion des Schaumstoffs 46 am Kunststoffträger 38 ist auch eine Nassraumvariante möglich, welche hier nicht dargestellt ist. Hierzu sind beispielsweise nur Einzeladerabdichtungen an den abgesicherten Leitungen 32 und zum Beispiel eine zusätzliche Kappe über den Sicherungen 30 am Kunststoffträger 38 erforderlich. Die beschriebene Vorgehensweise ist dabei unabhängig von dem Material des Kerns 16 der Hauptversorgungsleitung 12. Beispielsweise kann das Verfahren auch dann angewendet werden, wenn statt des Kerns 16 aus Aluminium ein Kern aus Kupfer verwendet wird.

In Fig. 11 ist die fünfte Ausführungsform der Leitungsanordnung 10 in einer teilweise geschnittenen Rückansicht gezeigt. In dieser Darstellung kann man gut erkennen, wie der Schaumstoff 46 auch die Isolierung 14 der Hauptversorgungsleitung 12 und zum Teil auch den Kunststoffträger 38 umgibt.

In Fig. 12 ist die fünfte Ausführungsform der Leitungsanordnung 10 in einer Draufsicht gezeigt. Hier sieht man, wie der als Dichtung dienende Schaumstoff 46 die Hauptversorgungsleitung 12 und auch den Kunststoffträger 38 seitlich überragt.

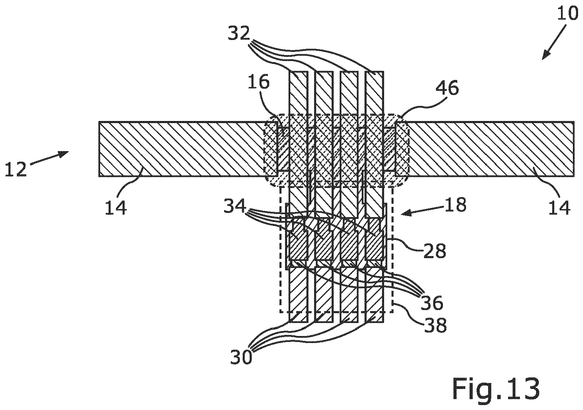

In Fig. 13 ist schließlich eine sechste Ausführungsform der Leitungsanordnung 10 in einer Draufsicht gezeigt. Diese Ausführungsform unterscheidet sich von der fünften Ausführungsform lediglich dadurch, wie die abgesicherten Leitungen 32 zur Hauptversorgungsleitung 12 angeordnet sind. In dem Fall verlaufen die abgesicherten Leitungen 32 nämlich quer zur Längserstreckungsrichtung der Hauptversorgungsleitung 12, wohingegen bei der fünften Ausführungsform die abgesicherten Leitungen 32 in derselben Richtung wie die Hauptversorgungsleitung 12 verlaufen. Der Herstellvorgang bei der vorliegend gezeigten Ausführungsform kann also im Wesentlichen gleich gestaltet werden wie bei der fünften Ausführungsform der Leitungsanordnung 10.

Bei allen Ausführungsformen der Leitungsanordnung 10 ist es mittels der als Dichtungen fungierenden Schrumpfschläuche 22 beziehungsweise Klebeschrumpfschläuche 22 oder mittels des Schaumstoffs 46 möglich, ein Eindringen von Elektrolyten in die jeweiligen Kontaktierungsbereiche 20 zu vermeiden, wo der Stromverteiler 18 mit der Hauptversorgungsleitung 12 elektrisch leitend verbunden worden ist. Insbesondere bei unterschiedlichen Materialpaarungen kann dadurch zuverlässig verhindert werden, dass eine Kontaktkorrosion auftritt.

### BEZUGSZEICHENLISTE

- 10: Leitungsanordnung
- 12: Hauptversorgungsleitung
- 14: Isolierung der Hauptversorgungsleitung
- 16: leitender Kern der Hauptversorgungsleitung
- 18: Stromverteiler
- 20: Kontaktierungsbereich der Hauptversorgungsleitung
- 22: Schrumpfschlauch
- 24: Einleger
- 26: Stromverteilerbereich
- 28: Kontaktelement
- 30: Sicherung
- 32: abgesicherte Leitung
- 34: Leitungssatzkontakt
- 36: Kontaktsicherung
- 38: Kunststoffträger
- 40: leitender Kern aus Kupfer der Hauptversorgungsleitung
- 42: als Kontaktierungsbereiche dienende Endabschnitte der Hauptversorgungsleitung
- 44: Rohr des Stromverteilers
- 46: als Dichtung dienender Schaumstoff

## Patentansprüche

1. Leitungsanordnung (10) für ein Bordnetz eines Kraftfahrzeugs, umfassend eine Hauptversorgungsleitung (12) für das Bordnetz und wenigstens einen zum Abgreifen von Strom für zumindest einen Verbraucher dienenden Stromverteiler (18), welcher an zumindest einem abisolierten Kontaktierungsbereich (20) der Hauptversorgungsleitung (12) elektrisch leitend mit dieser verbunden ist, wobei der Stromverteiler (18) und die Hauptversorgungsleitung (12) zumindest im Kontaktierungsbereich (20) außenseitig von einer Dichtung (22, 46) flüssigkeitsdicht umschlossen sind, **dadurch gekennzeichnet, dass** ein Stromverteilerbereich (26) beabstandet von einem der an dem Kontaktierungsbereich (20) angrenzenden Isolierungsabschnitte angeordnet ist, wobei zwischen dem Stromverteilerbereich (26) und dem betreffenden Isolierungsabschnitt ein Einleger (24) zum Abdichten angeordnet ist.

2. Leitungsanordnung (10) nach Anspruch 1,
**dadurch gekennzeichnet, dass**
die Hauptversorgungsleitung (12) ein Rundleiter oder ein Flachleiter ist.

3. Leitungsanordnung (10) nach einem der vorhergehenden Ansprüche,
**dadurch gekennzeichnet, dass**
die Hauptversorgungsleitung (12) einen ersten leitenden Kern (16) aus Aluminium und einen zweiten leitenden Kern (40) aus Kupfer aufweist, welcher den Kontaktierungsbereich (20) aufweist.

4. Leitungsanordnung (10) nach einem der Ansprüche 1 oder 2,
**dadurch gekennzeichnet, dass**
die Hauptversorgungsleitung (12) ausschließlich einen leitenden Kern (16) aus Aluminium aufweist.

5. Leitungsanordnung (10) nach einem der vorhergehenden Ansprüche,
**dadurch gekennzeichnet, dass**
der Stromverteiler (18) aus Kuper hergestellt ist.

6. Leitungsanordnung (10) nach einem der vorhergehenden Ansprüche,
**dadurch gekennzeichnet, dass**
die Dichtung (22, 46) jeweilige an den Kontaktierungsbereich (20) angrenzende Isolierungsabschnitte der Hauptversorgungsleitung (12) umschließt.

7. Leitungsanordnung (10) nach einem der vorhergehenden Ansprüche,
**dadurch gekennzeichnet, dass**
die Hauptversorgungsleitung (12) unterbrochen ist, wobei jeweilige freie abisolierte als Kontaktierungsbereiche dienende Endabschnitte (42) der Hauptversorgungsleitung (12) mit dem Stromverteiler (18) verbunden sind.

8. Leitungsanordnung (10) nach Anspruch 7,
**dadurch gekennzeichnet, dass**
der Stromverteiler (18) ein Blech ist.

9. Leitungsanordnung (10) nach Anspruch 7,
**dadurch gekennzeichnet, dass**
der Stromverteiler (18) ein Rohr (44) umfasst, in welchem die Endabschnitte (42) der Hauptversorgungsleitung (12) angeordnet sind.

10. Leitungsanordnung (10) nach einem der vorhergehenden Ansprüche,
**dadurch gekennzeichnet, dass**
die Dichtung ein Schrumpfschlauch (22), insbesondere ein Klebeschrumpfschlauch (22), ist.

11. Leitungsanordnung (10) nach einem der Ansprüche 1 bis 9,
**dadurch gekennzeichnet, dass**
die Dichtung ein Schaumstoff (46) ist.

12. Leitungsanordnung (10) nach einem der vorhergehenden Ansprüche,
**dadurch gekennzeichnet, dass**
der Stromverteiler (18) mit einem Kunststoffträger (38) verbunden ist, welcher wenigstens ein Kontaktelement (28) des Stromverteilers (18) abstützt.

13. Leitungsanordnung (10) nach Anspruch 12,
**dadurch gekennzeichnet, dass**
ein Teil des Kunststoffträgers (38) mittels der Dichtung (22, 46) abgedichtet ist.

14. Verfahren zum Herstellen einer Leitungsanordnung (10) für ein Bordnetz eines Kraftfahrzeugs, bei welchem eine Hauptversorgungsleitung (12) für das Bordnetz und wenigstens ein zum Abgreifen von Strom für zumindest einen Verbraucher dienender Stromverteiler (18) an zumindest einem abisolierten Kontaktierungsbereich (20) der Hauptversorgungsleitung (12) elektrisch leitend mit dieser verbunden sowie der Stromverteiler (18) und die Hauptversorgungsleitung (12) zumindest im Kontaktierungsbereich (20) außenseitig von einer Dichtung (22, 46) flüssigkeitsdicht umschlossen werden, **dadurch gekennzeichnet, dass** ein Stromverteilerbereich (26) beabstandet von einem der an dem Kontaktierungsbereich (20) angrenzenden Isolierungsabschnitte angeordnet wird, wobei zwischen dem Stromverteilerbereich (26) und dem betreffenden Isolierungsabschnitt ein Einleger (24) zum Abdichten angeordnet wird.

## Claims

1. Line arrangement (10) for an on-board electrical system of a motor vehicle, comprising a main supply line (12) for the on-board electrical system and at least one power distributor (18) which serves for tapping off current for at least one load and which is electrically conductively connected to the main supply line (12) in at least one stripped contact-making region (20) of the said main supply line, wherein the power distributor (18) and the main supply line (12) are surrounded in a liquid-tight manner by a seal (22, 46) on the outside at least in the contact-making region (20), **characterized in that** a power distributor region (26) is arranged at a distance from one of the insulating sections adjoining the contact-making region (20), wherein an insert (24) for sealing is arranged between the power distributor region (26) and the insulating section in question.

2. Line arrangement (10) according to Claim 1,
**characterized in that**
the main supply line (12) is a round conductor or a flat conductor.

3. Line arrangement (10) according to either of the preceding claims,
**characterized in that**
the main supply line (12) comprises a first conductive core (16) composed of aluminium and a second conductive core (40) composed of copper, which second conductive core comprises the contact-making region (20).

4. Line arrangement (10) according to either of Claims 1 and 2,
**characterized in that**
the main supply line (12) exclusively comprises a conductive core (16) composed of aluminium.

5. Line arrangement (10) according to one of the preceding claims,
**characterized in that**
the power distributor (18) is produced from copper.

6. Line arrangement (10) according to one of the preceding claims,
**characterized in that**
the seal (22, 46) surrounds respective insulating sections, adjoining the contact-making region (20), of the main supply line (12).

7. Line arrangement (10) according to one of the preceding claims,
**characterized in that**
the main supply line (12) is interrupted, wherein respective free stripped end sections (42), serving as contact-making regions, of the main supply line (12) are connected to the power distributor (18).

8. Line arrangement (10) according to Claim 7,
**characterized in that**
the power distributor (18) is a metal sheet.

9. Line arrangement (10) according to Claim 7,
**characterized in that**
the power distributor (18) comprises a pipe (44) in which the end sections (42) of the main supply line (12) are arranged.

10. Line arrangement (10) according to one of the preceding claims,
**characterized in that**
the seal is a shrink sleeve (22), in particular an adhesive shrink sleeve (22).

11. Line arrangement (10) according to one of Claims 1 to 9,
**characterized in that**
the seal is a foam (46).

12. Line arrangement (10) according to one of the preceding claims,
**characterized in that**
the power distributor (18) is connected to a plastic carrier (38) which supports at least one contact element (28) of the power distributor (18).

13. Line arrangement (10) according to Claim 12,
**characterized in that**
a portion of the plastic carrier (38) is sealed off by means of the seal (22, 46).

14. Method for producing a line arrangement (10) for an on-board electrical system of a motor vehicle, in which method a main supply line (12) for the on-board electrical system and at least one power distributor (18) which serves for tapping off current for at least one load are electrically conductively connected to this in at least one stripped contact-making region (20) of the main supply line (12) and the power distributor (18) and the main supply line (12) are surrounded in a liquid-tight manner by a seal (22, 46) on the outside at least in the contact-making region (20), **characterized in that** a power distributor region (26) is arranged at a distance from one of the insulating sections adjoining the contact-making region (20), wherein an insert (24) for sealing is arranged between the power distributor region (26) and the insulating section in question.

## Revendications

1. Ensemble de câble (10) pour un réseau de bord d'un véhicule automobile, comprenant un câble d'alimentation principal (12) pour le réseau de bord et au moins un distributeur de courant (18) servant à prélever du courant pour au moins un consommateur et qui est relié de manière électriquement conductrice au câble d'alimentation principal (12) dans au moins une zone de mise en contact dénudée (20) de celui-ci, le distributeur de courant (18) et le câble d'alimentation principal (12) étant entourés de manière étanche aux liquides par un dispositif d'étanchéité (22, 46) au moins dans la zone de mise en contact (20) sur le côté extérieur,
**caractérisé en ce qu'**une zone de distributeur de courant (26) est disposée à distance d'une des parties d'isolation adjacentes à la zone de mise en contact (20), un insert (24) pour créer l'étanchéité étant disposé entre la zone de distributeur de courant (26) et la partie d'isolation concernée.

2. Ensemble de câble (10) selon la revendication 1, **caractérisé en ce que** le câble d'alimentation principal (12) est un conducteur rond ou un conducteur plat.

3. Ensemble de câble (10) selon l'une quelconque des revendications précédentes, **caractérisé en ce que** le câble d'alimentation principal (12) présente une première âme conductrice (16) en aluminium et une deuxième âme conductrice (40) en cuivre qui présente la zone de mise en contact (20).

4. Ensemble de câble (10) selon l'une quelconque des revendications 1 ou 2, **caractérisé en ce que** le câble d'alimentation principal (12) présente uniquement une âme conductrice (16) en aluminium.

5. Ensemble de câble (10) selon l'une quelconque des revendications précédentes, **caractérisé en ce que** le distributeur de courant (18) est fabriqué en cuivre.

6. Ensemble de câble (10) selon l'une quelconque des revendications précédentes, **caractérisé en ce que** le dispositif d'étanchéité (22, 46) entoure des parties d'isolation respectives du câble d'alimentation principal (12) qui sont adjacentes à la zone de mise en contact (20).

7. Ensemble de câble (10) selon l'une quelconque des revendications précédentes, **caractérisé en ce que** le câble d'alimentation principal (12) est discontinu, des parties d'extrémité (42) dénudées libres respectives, servant de zones de mise en contact, du câble d'alimentation principal (12) étant reliées au distributeur de courant (18).

8. Ensemble de câble (10) selon la revendication 7, **caractérisé en ce que** le distributeur de courant (18) est une tôle.

9. Ensemble de câble (10) selon la revendication 7, **caractérisé en ce que** le distributeur de courant (18) comprend un tube (44) dans lequel sont disposées les parties d'extrémité (42) du câble d'alimentation principal (12).

10. Ensemble de câble (10) selon l'une quelconque des revendications précédentes, **caractérisé en ce que** le dispositif d'étanchéité est une gaine thermorétractable (22), en particulier une gaine thermorétractable adhésive (22).

11. Ensemble de câble (10) selon l'une quelconque des revendications 1 à 9, **caractérisé en ce que** le dispositif d'étanchéité est une mousse synthétique (46) .

12. Ensemble de câble (10) selon l'une quelconque des revendications précédentes, **caractérisé en ce que** le distributeur de courant (18) est relié à un support en matière plastique (38) qui soutient au moins un élément de contact (28) du distributeur de courant (18).

13. Ensemble de câble (10) selon la revendication 12, **caractérisé en ce qu'**une partie du support en matière plastique (38) est rendue étanche au moyen du dispositif d'étanchéité (22, 46).

14. Procédé de fabrication d'un ensemble de câble (10) pour un réseau de bord d'un véhicule automobile, dans lequel un câble d'alimentation principal (12) pour le réseau de bord et au moins un distributeur de courant (18) servant à prélever du courant pour au moins un consommateur sont reliés de manière électriquement conductrice au câble d'alimentation principal (12) dans au moins une zone de mise en contact dénudée (20) de celui-ci, et le distributeur de courant (18) et le câble d'alimentation principal (12) sont entourés de manière étanche aux liquides par un dispositif d'étanchéité (22, 46) au moins dans la zone de mise en contact (20) sur le côté extérieur,
**caractérisé en ce qu'**une zone de distributeur de courant (26) est disposée à distance d'une des parties d'isolation adjacentes à la zone de mise en contact (20), un insert (24) pour créer l'étanchéité étant disposé entre la zone de distributeur de courant (26) et la partie d'isolation concernée.
